(19) Europäisches Patentamt
European Patent Office
Office européen des brevets

(11) EP 4 711 732 A1

(12) EUROPEAN PATENT APPLICATION
published in accordance with Art. 153(4) EPC

(43) Date of publication:
18.03.2026 Bulletin 2026/12

(51) International Patent Classification (IPC):
G01M 11/00 (2006.01)  G02B 6/122 (2006.01)
H01S 5/0683 (2006.01)

(21) Application number: 24810661.9

(22) Date of filing: 04.03.2024

(52) Cooperative Patent Classification (CPC):
G01M 11/00; G02B 6/122; H01S 5/0683

(86) International application number:
PCT/JP2024/008099

(87) International publication number:
WO 2024/241653 (28.11.2024 Gazette 2024/48)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 19.05.2023 JP 2023083321

(71) Applicant: Hamamatsu Photonics K.K.
Hamamatsu-shi, Shizuoka 435-8558 (JP)

(72) Inventor: NAKAMURA, Tomonori
Hamamatsu-shi, Shizuoka 435-8558 (JP)

(74) Representative: Hoffmann Eitle
Patent- und Rechtsanwälte PartmbB
Arabellastraße 30
81925 München (DE)

(54) INSPECTION DEVICE AND INSPECTION METHOD

(57) An inspection apparatus 1 includes a stage 10 configured to hold a PIC 100, a PIC controller 20 configured to control an operation of the PIC 100, an LRG dichroic mirror 61 having a transmission characteristic in which transmittance varies linearly in a predetermined wavelength range and configured to transmit and reflect light guided by a waveguide 108 and output from at least one optical output unit 102 on the basis of the transmission characteristic, a first camera 62 configured to capture the light transmitted through the LRG dichroic mirror 61 to output a transmission image, a second camera 63 configured to capture the light reflected by the LRG dichroic mirror 61 to output a reflection image, and a computer 70 configured to execute a first process for deriving wavelength information about light output from the optical output unit 102 on the basis of the transmission image and the reflection image.

Fig.1

**Description**

**Technical Field**

The present disclosure relates to an inspection apparatus and an inspection method.

**Background Art**

In recent years, photonic integrated circuits (PIC: Photonic ICs) have been developed. Photonic integrated circuits are apparatuss into which various optical functions are integrated and transmit information signals by means of light. As a method for inspecting a photonic integrated circuit, a method for capturing infrared light scattered due to a defect in a waveguide within a photonic integrated circuit and displaying a captured image on a display to determine a spatial position of the defect is known (see, for example, Patent Document Literature 1).

**Citation List**

**Patent Literature**

[Patent Literature 1] Japanese Unexamined Patent Publication No. 2022-58070

**Summary of Invention**

**Technical Problem**

Although a spatial position of a defect can be ascertained from a captured image in the above-described inspection method, it is not possible to obtain information (e.g., wavelength information) about light output from a photonic integrated circuit. Thus, a process for appropriately inspecting a photonic integrated circuit may not be performed.
The present disclosure is made in view of the above circumstances, and relates to an inspection apparatus and inspection method that enable a photonic integrated circuit to be appropriately inspected by acquiring information about light output from the photonic integrated circuit.

**Solution to Problem**

An inspection apparatus according to an aspect of the present disclosure is [1] "an inspection apparatus for inspecting a photonic integrated circuit having at least one optical output unit and a waveguide, the inspection apparatus comprising: a stage configured to hold the photonic integrated circuit; a control unit configured to control an operation of the photonic integrated circuit; an optical filter having a transmission characteristic in which transmittance varies linearly in a predetermined wavelength range and configured to transmit and reflect light guided by the waveguide and output from at least one optical output unit on the basis of the transmission characteristic; a first image sensor configured to capture the light transmitted through the optical filter to output first image data; a second image sensor configured to capture the light reflected by the optical filter to output second image data; and an analysis unit configured to execute a first process for deriving wavelength information about light output from the optical output unit on the basis of the first image data and the second image data."
In the inspection apparatus according to the aspect of the present disclosure, the light output from the optical output unit of the photonic integrated circuit is transmitted and reflected by the optical filter according to a wavelength. Also, the wavelength information about the light output from the optical output unit is derived on the basis of the first image data obtained by capturing the transmitted light and the second image data obtained by capturing the reflected light. Thus, in the inspection apparatus according to the aspect of the present disclosure, because the optical filter is used to transmit and reflect the light in accordance with the wavelength, the first image data and the second image data are image data according to the wavelength of the light. By deriving the wavelength information about the light from such image data, it is possible to acquire the wavelength information about the light with high accuracy. As described above, the inspection apparatus according to an aspect of the present invention can acquire information (specifically, wavelength information) about light output from the photonic integrated circuit. As a result, the photonic integrated circuit can be appropriately inspected using the wavelength information.
An inspection apparatus according to an aspect of the present disclosure may be [2] "the inspection apparatus according to [1], wherein the photonic integrated circuit has a plurality of optical output units, and wherein the optical filter transmits and reflects the light output from the plurality of optical output units on the basis of the transmission characteristic." According to this configuration, the wavelength information about the light from the plurality of optical output units installed at positions spatially different from each other can be acquired at once, and the photonic integrated circuit can be inspected more quickly and appropriately.

An inspection apparatus according to an aspect of the present disclosure may be [3] "the inspection apparatus according to [1] or [2], wherein the control unit controls a temperature of at least a part of the photonic integrated circuit." By controlling the temperature of the photonic integrated circuit in this way, the characteristics of the waveguide of the photonic integrated circuit can be controlled, for example, to adjust the wavelength of the light output from the optical output unit. Thereby, it is possible to appropriately inspect the photonic integrated circuit while easily changing a condition of the light wavelength.

The inspection apparatus according to an aspect of the present disclosure may be [4] "the inspection apparatus according to any one of [1] to [3], wherein the photonic integrated circuit has at least one optical input unit, and wherein the optical filter transmits and reflects the light input from the optical input unit, guided by the waveguide, and output from the optical output unit, on the basis of the transmission characteristic." According to this configuration, it is possible to appropriately acquire the wavelength information with respect to the light that is input from the optical input unit of the photonic integrated circuit and output from the optical output unit through the waveguide.

An inspection apparatus according to an aspect of the present disclosure may be [5] "the inspection apparatus according to [4], further comprising a first optical scanner unit configured to perform an optical scan on a first area where the optical input unit is formed in the photonic integrated circuit and detect the light related to the optical scan, wherein the analysis unit further executes a second process for identifying in advance a position of the optical input unit to which the light is input when the first process is performed, and identifies the position of the optical input unit on the basis of an intensity of the light detected by the first optical scanner unit in the second process." According to this configuration, the position of the optical input unit can be identified from a light intensity difference and the subsequent first process (the process for deriving the wavelength information about the light output from the optical output unit) can be performed appropriately.

An inspection apparatus according to an aspect of the present disclosure may be [6] "the inspection apparatus according to any one of [1] to [5], further comprising a second optical scanner unit configured to perform an optical scan on a second area where the optical output unit is formed in the photonic integrated circuit and detect the light related to the optical scan, wherein the analysis unit further executes a third process for identifying in advance a position of the optical output unit from which light is output when the first process is performed, and identifies the position of the optical output unit on the basis of an intensity of the light detected by the second optical scanner unit in the third process. According to this configuration, the position of the optical output unit can be identified from a light intensity difference and the subsequent first process (the process for deriving the wavelength information about the light output from the optical output unit) can be performed appropriately.

An inspection apparatus according to an aspect of the present disclosure may be [7] "the inspection apparatus according to any one of [1] to [6], wherein, in the first process, the analysis unit derives a transmission intensity, which is an intensity of the light transmitted through the optical filter, from the first image data, derives a reflection intensity, which is an intensity of the light reflected by the optical filter, from the second image data, and derives the wavelength information on the basis of the transmission intensity and the reflection intensity." In the optical filter, because the light is transmitted and reflected according to the wavelength, the wavelength information can be derived with high accuracy from information about the transmission intensity (the amount of transmitted light) and the reflection intensity (the amount of reflected light).

The inspection apparatus according to an aspect of the present disclosure may be [8] "the inspection apparatus according to [7], wherein the analysis unit derives a difference value between the transmission intensity and the reflection intensity and derives the wavelength information on the basis of the difference value." The wavelength information can be derived with high accuracy by deriving the wavelength information from the difference value between the transmission intensity and the reflection intensity.

An inspection apparatus according to an aspect of the present disclosure may be [9] "the inspection apparatus according to any one of [1] to [8], wherein the wavelength information is information indicating a centroid wavelength of the light output from the optical output unit." Thus, the wavelength information can be appropriately derived.

An inspection apparatus according to an aspect of the present disclosure may be [10] "the inspection apparatus according to any one of [1] to [9], wherein the analysis unit further executes a fourth process for creating a table indicating a relationship between the wavelength information and temperature control of the photonic integrated circuit by associating the wavelength information derived in the first process with information about the temperature control of the photonic integrated circuit by the control unit at the time when the wavelength information is derived." According to this configuration, it is possible to create a table of temperature control at the time when the wavelength of the photonic integrated circuit is adjusted and more easily control the photonic integrated circuit.

An inspection method according to an aspect of the present disclosure is [11] "an inspection apparatus for inspecting a photonic integrated circuit having at least one optical output unit and a waveguide, the inspection method comprising: controlling an operation of the photonic integrated circuit; transmitting and reflecting light guided by the waveguide and output from at least one optical output unit on the basis of a transmission characteristic, by an optical filter having the transmission characteristic in which transmittance varies linearly in a predetermined wavelength range; capturing the light transmitted through the optical filter to output first image data; capturing the light reflected by the optical filter to output second image data; and deriving wavelength information about light output from the optical output unit on the basis of the first image data and the second image data."

Advantageous Effects of Invention

According to the present disclosure, it is possible to appropriately inspect a photonic integrated circuit by acquiring information about the light output from a photonic integrated circuit.

**Brief Description of Drawings**

FIG. 1 is a diagram schematically showing an inspection apparatus according to a first embodiment of the present disclosure.
FIG. 2 is a plan view schematically showing a PIC.
FIG. 3(a) is a side view of an input end surface side of the PIC.
FIG. 3(b) is a side view of an output end surface side of the PIC.
FIG. 4 shows an optical spectrum and characteristics of an LRG dichroic mirror.
FIG. 5 is a side view showing details of the inspection apparatus shown in FIG. 1.
FIGS. 6(a) to 6(c) are explanatory diagrams of a setting process.
FIG. 7 is an explanatory diagram of the setting process.
FIG. 8 is an explanatory diagram of a process for approximately identifying the position of a optical input unit.
FIG. 9 is an explanatory diagram of a process for approximately identifying the position of the optical input unit.
FIG. 10 is an explanatory diagram of a process for approximately identifying the position of the optical input unit.
FIG. 11 is an explanatory diagram of a process for approximately identifying the position of a optical output unit.
FIG. 12 is an explanatory diagram of a process for approximately identifying the position of the optical output unit.
FIG. 13 is an explanatory diagram of a process for approximately identifying the position of the optical output unit.
FIG. 14 is an explanatory diagram of a process for identifying the position of the optical input unit with high accuracy and the position of the optical output unit with high accuracy.
FIG. 15 is an explanatory diagram of a process for identifying the position of the optical input unit with high accuracy.
FIG. 16 is an explanatory diagram of a process for identifying the position of the optical output unit with high accuracy.
FIG. 17 is an explanatory diagram of a process for deriving wavelength information.
FIG. 18 is an explanatory diagram of a process for deriving wavelength information.
FIG. 19 is an explanatory diagram of a process for deriving wavelength information.
FIG. 20 is a diagram showing an example of a relationship between heater input power and an amount of wavelength shift.
FIG. 21 is a flowchart of an inspection method.
FIG. 22 is a side view schematically showing an inspection apparatus according to a second embodiment of the present disclosure.
FIG. 23 is an explanatory diagram of a process for identifying a position of a grating with high accuracy.
FIG. 24 is an explanatory diagram of a process for identifying a position of gratings with high accuracy.
FIG. 25 is an explanatory diagram of a process for deriving wavelength information.
FIG. 26 is an explanatory diagram of a process for deriving wavelength information in a third embodiment of the present disclosure.
FIG. 27 is an explanatory diagram of a process for deriving wavelength information.
FIGS. 28(a) to 28(d) are explanatory diagrams of an imaging unit according to a modification example.
FIG. 29 is an explanatory diagram of an imaging unit according to a modification example.

**Description of Embodiments**

Hereinafter, embodiments of the present invention will be described in detail with reference to the drawings. The same or corresponding parts are denoted by the same reference signs in the drawings and redundant descriptions will be omitted.

[First embodiment]

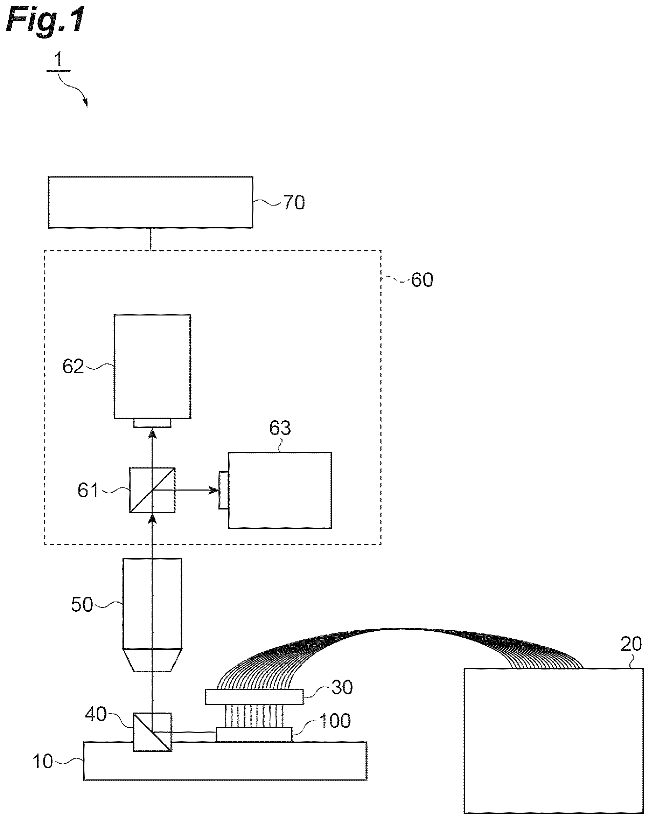

FIG. 1 is a side view schematically showing an inspection apparatus 1 according to a first embodiment. The inspection apparatus 1 is a apparatus for inspecting a photonic integrated circuit (PIC: Photonic IC) 100. The PIC 100 is a circuit in which a plurality of photonics components such as a waveguide, a laser element, a modulator, and a detector are integrated into a single chip. Compared to conventional integrated circuits such as silicon ICs, the PIC 100 has superior high speed, a wider bandwidth, and superior power efficiency. Moreover, the inspection here may include not only checking the PIC 100 for some abnormality (defect), but also, for example, generating information that is necessary for controlling the PIC 100 and the like. The inspection apparatus 1 detects light output from the PIC 100, derives wavelength information about the light, and inspects the PIC 100 using the wavelength information. By deriving the wavelength information about the light output from the PIC 100, it is possible to inspect whether light of a desired wavelength has been output (channel accuracy or stability of light output), whether the laser elements within the PIC 100 have a malfunction of an electrical or optical connection state, whether the waveguide in the PIC 100 is defective (the presence of light leakage or the degree of light leakage), whether the waveguide has appropriate optical transmission characteristics (wavelength-transmittance), or the like.

The inspection apparatus 1 transmits and reflects light from the PIC 100 according to a wavelength component and acquires a transmission image (first image data) output by capturing the transmitted light and a reflection image (second image data) output by capturing the reflected light. Also, the inspection apparatus 1 derives wavelength information about the light output from the PIC 100 on the basis of the transmission image and the reflection image (details will be described below).

As shown in FIG. 1, the inspection apparatus 1 has a stage 10, a PIC controller 20 (a control unit), a probe card 30, a mirror 40, a condenser lens 50, an imaging unit 60, and a computer 70 (an analysis unit).

The PIC 100 is placed and held on the stage 10. The stage 10 may be an XYZ stage configured so that the PIC 100 can be moved in an XYZ direction (forward, backward, left, right, upward, and downward directions). The XYZ stage may be used to adjust the position of the PIC 100 and perform a focus adjustment.

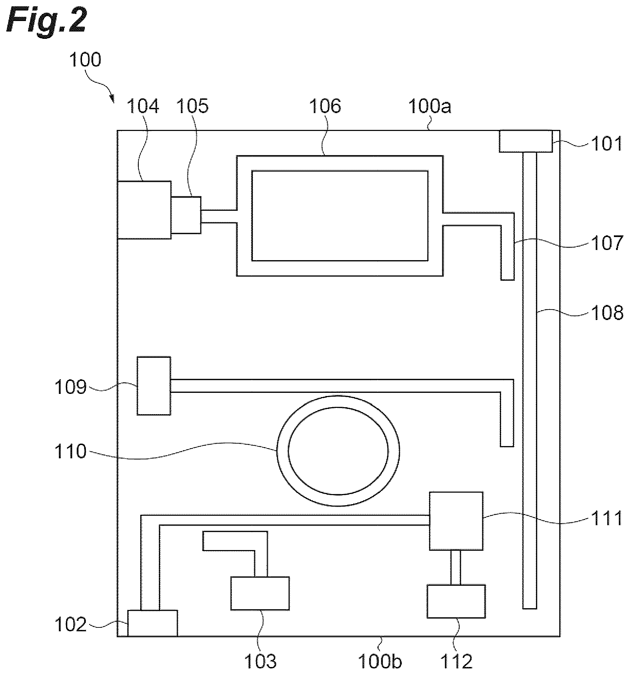

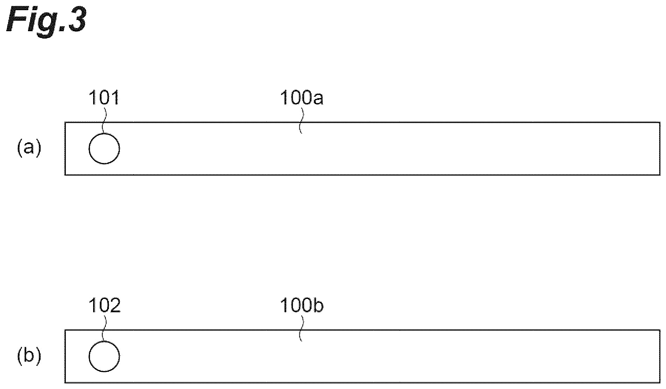

FIG. 2 is a plan view schematically showing the PIC 100. FIG. 3(a) is a side view of an input end surface 100a side of the PIC 100, and FIG. 3(b) is a side view of an output end surface 100b side of the PIC 100. The PIC 100 is an apparatus into which various optical functions are integrated and transmits information signals by means of light. As shown in FIG. 2, the PIC 100 is configured to include various elements. In the example shown in FIG. 2, the PIC 100 includes a optical input unit 101, a optical output unit 102, a grating 103, a laser element 104, an input coupler 105, an optical modulator 106, an optical coupler 107, a waveguide 108, photodiodes 109 and 112, an optical ring resonance circuit 110, a photonic crystal 111, and the like. The PIC 100 has at least one optical output unit and a waveguide.

The optical input unit 101 is a part where light is input from outside the PIC 100 to the inside of the PIC 100. The optical input unit 101 is formed on the input end surface 100a that is one side of the PIC 100, as shown in FIG. 3(a). Although only one optical input unit 101 is shown in FIG. 3(a), a plurality of optical input units 101 are formed on the input end surface 100a. For example, in a practical application after inspection, an optical cable is connected to the optical input unit 101.

The optical output unit 102 is a part that outputs light outside the PIC 100. The optical output unit 102 is formed on the output end surface 100b which is the other end surface of the PIC 100, as shown in FIG. 3(b). Although only one optical output unit 102 is shown in FIG. 3(b), a plurality of optical output units 102 are formed on the output end surface 100b. For example, in a practical application after inspection, an optical cable is connected to the optical output unit 102. The optical output unit 102 may output light input from the optical input unit 101 and guided by the waveguide 108 to the outside of the PIC 100.

The grating 103 is arranged on the front (top) surface in the PIC 100 and functions as a optical output unit that outputs light upward (outside the PIC 100). The laser element 104 is a light source that emits laser light inside the PIC 100. The light emitted from the laser element 104 reaches the optical coupler 107 via the input coupler 105 and the optical modulator 106, and is guided by the waveguide 108.

The photodiodes 109 and 112 are light detectors provided inside the PIC 100. The optical ring resonance circuit 110 is a circuit that sets a resonant wavelength. The photonic crystal 111 is a structure in which a refractive index changes periodically, and is a structure in which light is confined in a small area and the light is manipulated. In addition, the PIC 100 may include not only each configuration (element) described above, but also various elements. The PIC 100 may, for example, have a microheater (not shown) mounted on each element, such as the optical ring resonance circuit 110 or the optical modulator. The microheater is configured to change the refractive index of the waveguide that constitutes each element of the optical ring resonance circuit 110, the optical modulator, or the like and control the resonant wavelength of the light being guided.

Returning to FIG. 1, the PIC controller 20 is a control unit for controlling the operation of each element within the PIC 100 that is an object to be inspected. The PIC controller 20 is electrically connected to the PIC 100 via the probe card 30. The PIC controller 20 supplies electric power to the light emitting elements (e.g., the laser element 104, the amplification element, or the like). The PIC controller 20 supplies a modulation signal to an optical modulator (an amplification element modulator, an electric field absorption modulator, a depletion layer modulator, a ring modulator, and the like). The modulation signal here is, for example, a signal related to modulation of a light intensity or switching of an optical switch. The PIC controller 20 supplies electric power to the microheater and controls a temperature of at least part of the PIC 100. Thereby, a refractive index of light guided in the waveguide 108 is controlled and a resonator length in the optical ring resonance circuit 110 is controlled. The PIC controller 20 supplies electric power to the photodiodes 109 and 112. The PIC controller 20 measures the temperature of the PIC 100. Temperature measurement may be performed by resistance measurement with a resistive element or may be performed by voltage measurement with a thermocouple. Moreover, the PIC controller 20 may control an IC part of the PIC 100 or perform wavelength measurement for emitted light. These functions may be performed by external apparatuss other than the PIC controller 20.

The mirror 40 is a mirror that reflects light from the PIC 100 in a direction of the condenser lens 50. The condenser lens 50 is, for example, an objective lens and is a lens that condenses light in the direction of the imaging unit 60.

The imaging unit 60 is configured to include an LRG (Liner Reflectance Gradient on the wavelength axis) dichroic mirror 61 (an optical filter), a first camera 62 (a first image sensor), and a second camera 63 (a second image sensor).

The LRG dichroic mirror 61 is a mirror created using a special optical material and separates light from the PIC 100 by transmitting and reflecting the light in accordance with a wavelength. The LRG dichroic mirror 61 has a transmission characteristic in which transmittance varies linearly in a predetermined wavelength range and transmits and reflects light guided by the waveguide 108 and output from the optical output unit 102 on the basis of the above-described transmission characteristic.

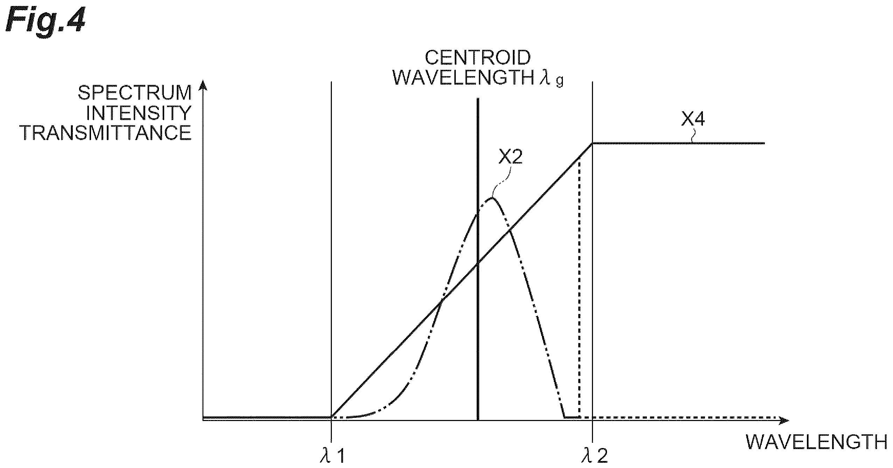

FIG. 4 is an explanatory diagram of an optical spectrum and characteristics of the LRG dichroic mirror 61. In FIG. 3, the horizontal axis represents a wavelength, and the vertical axis represents a spectral intensity (in the case of the optical spectrum) and transmittance (in the case of the LRG dichroic mirror 61). As shown in a characteristic X4 of the LRG dichroic mirror 61 of FIG. 4, in the LRG dichroic mirror 61, the transmittance (and reflectance) of light changes gradually as the wavelength changes in the predetermined wavelength range (a wavelength range of the wavelengths $\lambda 1$ to $\lambda 2$) and the light transmittance (and reflectance) is constant regardless of a change in wavelength in wavelength ranges other than the predetermined wavelength range (i.e., a lower wavelength side of the wavelength $\lambda 1$ and a higher wavelength side of the wavelength $\lambda 2$). In other words, in a predetermined wavelength range (the wavelength band of the wavelengths $\lambda 1$ to $\lambda 2$), the light transmittance changes to monotonically increase (the reflectance changes to monotonically decrease) as the wavelength changes. Because transmittance and reflectance are negatively correlated, i.e., as one changes in the direction of increasing, the other changes in the direction of decreasing, they may hereinafter be referred to simply as "transmittance" instead of "transmittance (and reflectance)". The term "constant light transmittance regardless of change in wavelength" includes, for example, a case where the change in transmittance for a change in wavelength of 1 nm is 0.1% or less as well as a case where the transmittance is completely constant. On the lower wavelength side of $\lambda 1$, the light transmittance is approximately 0% regardless of a change in the wavelength. On the higher wavelength side of $\lambda 2$, the light transmittance is approximately 100% regardless of a change in the wavelength. The term "light transmittance is approximately 0%" includes a transmittance of approximately (0%+10%), and the term "light transmittance is approximately 100%" includes a transmittance of approximately (100%-10%). As described above, the LRG dichroic mirror 61 is a separating optical element with a wavelength band of a predetermined width (a width of wavelengths $\lambda 1$ to $\lambda 2$) in which the transmittance changes as the wavelength changes.

Returning to FIG. 1, the first camera 62 captures the light transmitted through the LRG dichroic mirror 61 and outputs a transmission image (first image data). The second camera 63 captures the light reflected by the LRG dichroic mirror 61 and outputs a reflection image (second image data). In addition, in place of the first and second cameras 62 and 63, an area image sensor such as a CCD or a MOS may be used, or a line sensor or a time delay integration (TDI) sensor may be used. Moreover, instead of the first camera 62 and the second camera 63, one image sensor may be used, and an image sensor in which the light receiving unit of the one image sensor is divided may be used. In this case, the one image sensor includes a first light receiving unit (a first image sensor) and a second light receiving unit (a second image sensor). Moreover, the one image sensor may capture transmitted light in the first light receiving unit and output a transmission image, and capture reflected light in the second light receiving unit and output a reflection image.

The computer 70 is physically configured to include a memory such as a RAM and a ROM, a processor (an arithmetic circuit) such as a CPU, a communication interface, and a storage part such as a hard disk. The computer 70 operates when the CPU of a computer system executes a program stored in the memory. The computer 70 may be configured to include a microcomputer or an FPGA.

The computer 70 executes a first process of deriving wavelength information about the light output from the optical output unit 102 of the PIC 100 on the basis of the transmission and reflection images described above. In the first process, the computer 70 derives a transmission intensity (an amount of transmitted light), which is the intensity of light transmitted through the LRG dichroic mirror 61, on the basis of the transmission image and derives a reflection intensity (an amount of reflected light), which is the intensity of light reflected by the LRG dichroic mirror 61, on the basis of the reflection image. Wavelength information is derived on the basis of the amount of transmitted light and the amount of reflected light. The computer 70 derives a difference value between the amount of transmitted light and the amount of reflected light and derives the wavelength information on the basis of the difference value. The wavelength information here is information indicating a centroid wavelength of the light output from the optical output unit 102. Moreover, the transmission intensity (the amount of transmitted light) may also be an integrated value of intensities in areas of the image corresponding to the optical output unit 102 in the transmission image. Moreover, the transmission intensity (the amount of transmitted light) may be an intensity of each pixel that constitutes the area of the image corresponding to the optical output unit 102 in the transmission image. Furthermore, the reflected intensity (the amount of reflected light) may be an integrated value of intensities in areas of the image corresponding to the optical output unit 102 in the reflection image. Moreover, the reflection intensity (the amount of reflected light) may be the intensity of each pixel constituting the area of the image corresponding to the optical output unit 102 in the reflection image. Hereinafter, an example of a principle of centroid wavelength calculation will be described in detail with reference to FIG. 4.

As described above, the LRG dichroic mirror 61 reflects all light on the lower wavelength side of the wavelength $\lambda 1$ and transmits all light on the higher wavelength side of the wavelength $\lambda 2$, and the transmittance of light changes linearly in accordance with the wavelength in the wavelength band of the wavelengths $\lambda 1$ to $\lambda 2$. In this case, the transmittance $h(\lambda)$ in a relationship between the wavelengths $\lambda 1$ and $\lambda 2$ is expressed by the following Eq. (1), and the reflectance $1-h(\lambda)$ is expressed by the following Eq. (2).

$$h(\lambda)=(\lambda-\lambda 1)/(\lambda 2-\lambda 1)\ (1)$$

$$1-h(\lambda)=(\lambda 2-\lambda)/(\lambda 2-\lambda 1)\ (2)$$

It is also clear that the wavelength $\lambda 50\%$ at which the reflectance is 50% is expressed by the following Eq. (3).

$$\lambda 50\%=(\lambda 2+\lambda 1)/2\ (3)$$

If a certain spectrum $f(\lambda)$ is shown by a waveform X2 in FIG. 4 and located between $\lambda 1$ and $\lambda 2$ and is negligible at wavelengths shorter than $\lambda 1$ and longer than $\lambda 2$, the following Eq. (4) is valid under the assumption that an amount of reflected light and an amount of transmitted light are equal.

$$\int f(\lambda)h(\lambda)d\lambda=\int f(\lambda)(1-h(\lambda))d\lambda\ (4)$$

When Eq. (4) is modified, the following Eq. (5) is obtained.

$$2\int f(\lambda)h(\lambda)d\lambda=\int f(\lambda)d\lambda\ (5)$$

If Eq. (1) is substituted into Eq. (5), $2\int f(\lambda)(\lambda-\lambda 1)/(\lambda 2-\lambda 1)d\lambda=\int f(\lambda)d\lambda$ is set, both sides are further divided by $2\int f(\lambda)d\lambda/(\lambda 2-\lambda 1)$, and the following Eq. (6) is obtained.

$$\int f(\lambda)(\lambda-\lambda 1)d\lambda/\int f(\lambda)d\lambda=(\lambda 2-\lambda 1)/2$$

$$\int f(\lambda)\lambda d\lambda/\int f(\lambda)d\lambda=(\lambda 2+\lambda 1)/2\ (6)$$

Considering Eq. (3), it is clear that the right side of Eq. (6) is $\lambda 50\%$ and the left side is the centroid of $f(\lambda)$, which is generally any function. The left side of Eq. (6) is set as $\lambda f$. Based on the above, for any spectrum through the dichroic mirror whose transmittance varies linearly with a wavelength, when the amount of transmitted light is equal to the amount of reflected light, the centroid of the spectrum, $\lambda f$, is $\lambda 50\%$.

Subsequently, the second spectrum $g(\lambda)$ is considered. For the spectrum $g(\lambda)$, the spectrum is also contained entirely between $\lambda 1$ and $\lambda 2$. Now, for the spectra $f(\lambda)$ and $g(\lambda)$, a normalized difference value between transmitted light and reflected light is calculated. Tf denotes the transmitted light of $f(\lambda)$, Rf denotes the reflected light, Af denotes the total light amount, and Df denotes a difference value between transmitted light and reflected light. Tg denotes the transmitted light of $g(\lambda)$, Rg denotes the reflected light, Ag denotes the total light amount, and Dg denotes a difference value between transmitted light and reflected light. Moreover, $\lambda g$ denotes the centroid of $g(\lambda)$. In this case, Tf, Rf, Tg, and Rg are measured values and Af, Ag, Df, and Dg are values that can be calculated directly from the measured values. Each of these values is also expressed by the following equation.

$$Tf=\int f(\lambda)h(\lambda)d\lambda=\int f(\lambda)(\lambda-\lambda1)/(\lambda2-\lambda1)d\lambda \ (7)$$

$$Tg=\int g(\lambda)h(\lambda)d\lambda=\int g(\lambda)(\lambda-\lambda1)/(\lambda2-\lambda1)d\lambda \ (8)$$

$$Rf=\int f(\lambda)(1-h(\lambda))d\lambda=\int f(\lambda)(\lambda2-\lambda)/(\lambda2-\lambda1)d\lambda \ (9)$$

$$Rg=\int g(\lambda)(1-h(\lambda))d\lambda=\int g(\lambda)(\lambda2-\lambda)/(\lambda2-\lambda1)d\lambda \ (10)$$

$$Af=\int f(\lambda)d\lambda \ (11)$$

$$Ag=\int g(\lambda)d\lambda \ (12)$$

$$Df=Tf-Rf$$
$$=2/(\lambda2-\lambda1)*\int\lambda f(\lambda)d\lambda-(\lambda2+\lambda1)/(\lambda2-\lambda1)*\int f(\lambda)d\lambda \ (13)$$

$$Dg=Tg-Rg$$
$$=2/(\lambda2-\lambda1)*\int\lambda g(\lambda)d\lambda-(\lambda2+\lambda1)/(\lambda2-\lambda1)*\int g(\lambda)d\lambda \ (14)$$

Here, normalizing the difference value between the transmitted light and the reflected light is equivalent to dividing Df by Af and dividing Dg by Ag. If the difference between them is denoted by R, the following Eq. (15) is valid.

$$R=Dg/Ag-Df/Af$$
$$=\{\int g(\lambda)\lambda d\lambda/\int g(\lambda)d\lambda-\int f(\lambda)\lambda d\lambda/\int f(\lambda)d\lambda\}*2/(\lambda2-\lambda1)$$
$$=2(\lambda g-\lambda f)/(\lambda2-\lambda1) \ (15)$$

If the difference between the centroid wavelength $\lambda f$ of the spectrum $f(\lambda)$ and the centroid wavelength $\lambda g$ of the spectrum $g(\lambda)$ is $\delta\lambda$, the following Eqs. (16) and (17) are valid.

$$R=2\delta\lambda/(\lambda2-\lambda1) \ (16)$$

$$\delta\lambda=R(\lambda2-\lambda1)/2 \ (17)$$

As shown above, the difference between the centroids of two arbitrary spectra $f(\lambda)$ and $g(\lambda)$ can be obtained from calculations that take into account the amount of transmitted light and the amount of reflected light.

Also, when the centroid of $f(\lambda)$ is denoted by $\lambda50\%$, Df is 0 because the amount of reflected light and the amount of transmitted light are equal. In other words, the centroid wavelength $\lambda g$ of any spectrum $g(\lambda)$ is expressed by the following Eq. (18).

$$\lambda g=\delta\lambda+\lambda50\% \ (18)$$

As described above, the centroid wavelength of the spectrum (i.e., the wavelength information about the light) can be calculated from a design value of the LRG dichroic mirror 61, the amount of transmitted light, and the amount of reflected light. Also, the inspection apparatus 1 inspects the PIC 100 using the centroid wavelength (wavelength information) as described above.

Moreover, the centroid wavelength $\lambda g$ of any spectrum $g(\lambda)$ can be obtained by the following Eqs. (19) and (20). In this case, the transmitted light Tg, the reflected light Rg, the total amount of light Ag, and the centroid $\lambda g$ of $g(\lambda)$ are defined by Eqs. (21), (22), (23), and (24), respectively. Eq. (21) is synonymous with the above Eq. (8), Eq. (22) is synonymous with the above Eq. (10), Eq. (23) is synonymous with the above Eq. (12), and Eq. (24) is synonymous with the above Eq. (18).

[Math. 1]

$$\frac{T_g - R_g}{T_g + R_g} = \frac{T_g - R_g}{A_g} = \frac{2T_g - A_g}{A_g} = \frac{A_g - 2R_g}{A_g}$$

$$= \frac{\int_{\lambda_1}^{\lambda_2} \frac{2\lambda - (\lambda_1 + \lambda_2)}{\lambda_2 - \lambda_1} g(\lambda) d\lambda}{A_g}$$

$$= \frac{\int_{\lambda_1}^{\lambda_2} \frac{2(\lambda - \lambda_{50\%})}{\lambda_2 - \lambda_1} g(\lambda) d\lambda}{A_g}$$

$$= \frac{\frac{2}{\lambda_2 - \lambda_1} \left\{ \int_{\lambda_1}^{\lambda_2} \lambda g(\lambda) d\lambda - \lambda_{50\%} \int_{\lambda_1}^{\lambda_2} g(\lambda) d\lambda \right\}}{A_g}$$

$$= \frac{2}{\lambda_2 - \lambda_1} (\lambda_g - \lambda_{50\%}) \qquad (19)$$

$$\lambda_g = \frac{\lambda_2 - \lambda_1}{2} \left( \frac{T_g - R_g}{T_g + R_g} \right) + \lambda_{50\%} \qquad (20)$$

$$T_g = \int_{\lambda_1}^{\lambda_2} \frac{\lambda - \lambda_1}{\lambda_2 - \lambda_1} g(\lambda) d\lambda \qquad (21)$$

$$R_g = \int_{\lambda_1}^{\lambda_2} \frac{\lambda_2 - \lambda}{\lambda_2 - \lambda_1} g(\lambda) d\lambda \qquad (22)$$

$$A_g = T_g + R_g = \int_{\lambda_1}^{\lambda_2} g(\lambda) d\lambda \qquad (23)$$

$$\lambda_g = \frac{\int_{\lambda_1}^{\lambda_2} \lambda g(\lambda) d\lambda}{\int_{\lambda_1}^{\lambda_2} g(\lambda) d\lambda} = \frac{\int_{\lambda_1}^{\lambda_2} \lambda g(\lambda) d\lambda}{A_g} \qquad (24)$$

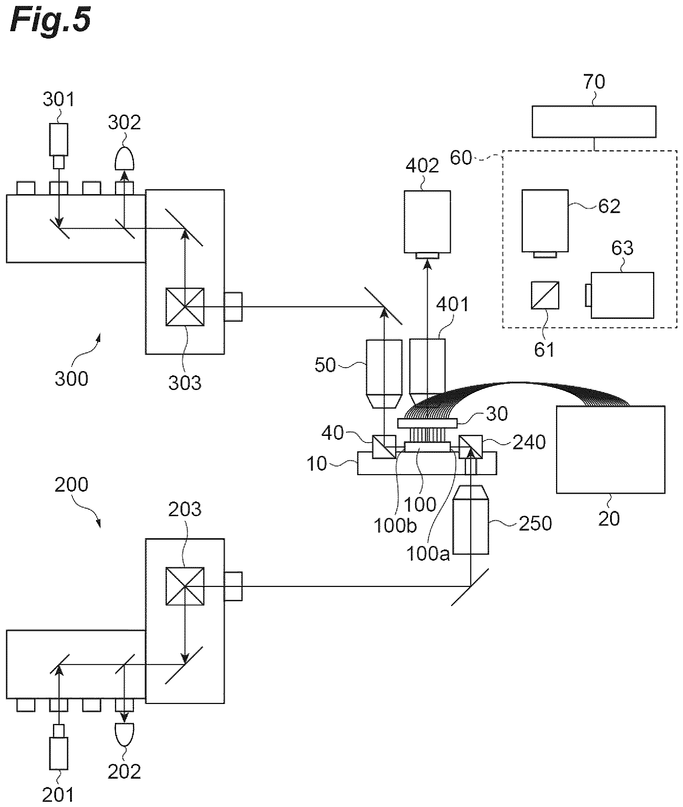

Processes of an inspection method to be performed using the inspection apparatus 1 will be described with reference to FIGS. 5 to 20. This inspection method approximately includes a pre-preparation process and a process for deriving wavelength information. The pre-preparation process includes a setting process, a process for approximately identifying the position of the optical input unit 101, a process for approximately identifying the position of the optical output unit 102, a process for identifying the position of the optical input unit 101 with high accuracy, and a process for identifying the position of the optical output unit 102 with high accuracy.

The inspection apparatus 1 that performs each of the above processes has the configuration shown in FIG. 5 in detail. FIG. 5 is a side view showing details of the light source apparatus 1 shown in FIG. 1. As shown in FIG. 5, the inspection apparatus 1 is configured to include a first scanner unit 200 (a first optical scanner unit), a second scanner unit 300 (a second optical scanner unit), a condenser lens 401, and an observation camera 402, in addition to the configuration shown in FIG. 1. The condenser lens 401 and the observation camera 402 are configured for use only in the pre-preparation process.

The first scanner unit 200 is configured to perform an optical scan on the input end surface 100a (a first area) of the PIC 100, where a plurality of optical input units 101 are formed, and detect the light related to the optical scan (specifically, light reflected on the input end surface 100a).

The first scanner unit 200 is configured to include a laser light source 201, a photodiode 202, a galvanometer mirror (optical scanner) 203, a mirror 240, and a condenser lens 250. The laser light source 201 is a light source emitting the laser light. The galvanometer mirror 203 is an optical scanner that reflects light emitted from the laser light source 201 in any direction to implement the optical scan on the input end surface 100a. The condenser lens 250 is, for example, an objective lens, and condenses light onto the mirror 240. The mirror 240 reflects light from the condenser lens 250 in the direction of the input end surface 100a of the PIC 100. The photodiode 202 is a photodetector that detects light reflected on the input end surface 100a. The photodiode 202 outputs a signal related to the detected light to the computer 70.

The second scanner unit 300 is configured to perform an optical scan on the output end surface 100b (a second area) of the PIC 100, where the plurality of optical output units 102 are formed, and detect the light related to the optical scan (specifically, light reflected on the output end surface 100b).

The second scanner unit 300 is configured to include a laser light source 301, a photodiode 302, and a galvanometer mirror (optical scanner) 303. The laser light source 301 is a light source emitting the laser light. The galvanometer mirror 303 is an optical scanner that reflects light emitted from the laser light source 201 in any direction to implement an optical scan on the output end surface 100b. The light from the galvanometer mirror 303 is radiated to the output end surface 100b of the PIC 100 via the condenser lens 250 and the mirror 40. The photodiode 302 is a photodetector that detects light reflected on the output end surface 100b. The photodiode 302 outputs a signal related to the detected light to the computer 70.

The observation camera 402 is a camera for observing the needle application of the probe card 30 to the chip of the PIC 100. The observation camera 402 performs the above-described observation by detecting light via the condenser lens 401, which is, for example, an objective lens.

Hereinafter, the pre-preparation processes (the setting process, the process for approximately identifying the position of the optical input unit 101, the process for approximately identifying the position of the optical output unit 102, the process for identifying the position of the optical input unit 101 with high accuracy, and the process for identifying the position of the optical output unit 102 with high accuracy) and the process for deriving wavelength information will be described chronologically.

(Setting process)

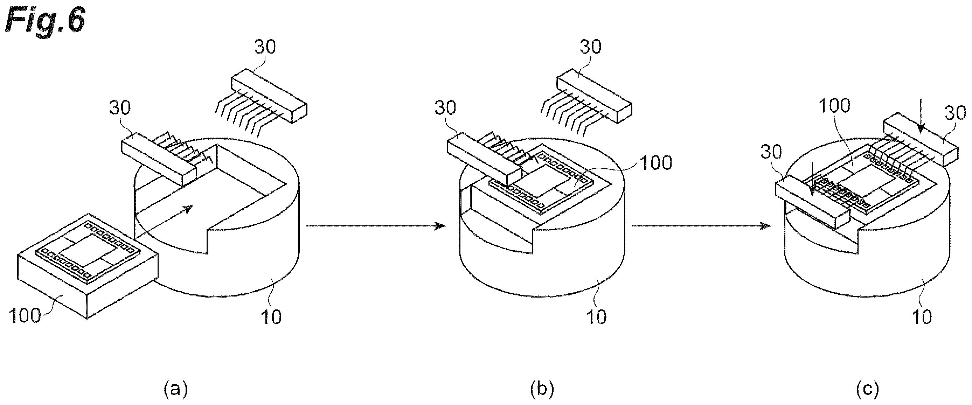

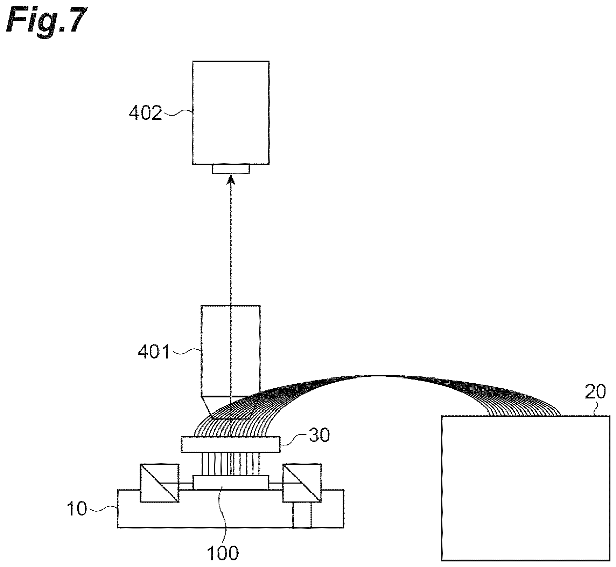

FIGS. 6(a) to 6(c) and 7 are explanatory diagrams of the setting process. Initially, a chip of the PIC 100 is mounted on a recess in the top surface of the stage 10, as shown in FIG. 6(a). Also, as shown in FIG. 6(b), the PIC 100 is fixed to the stage 10 and the position and direction (tilt) of the stage 10 are adjusted. Subsequently, as shown in FIG. 7 and FIG. 6(c), the needle application of the probe card 30 to the chip of the PIC 100 is performed while the position of the probe card 30 is observed by the observation camera 402. The above is the setting process.

(Process for approximately identifying position of optical input unit 101)

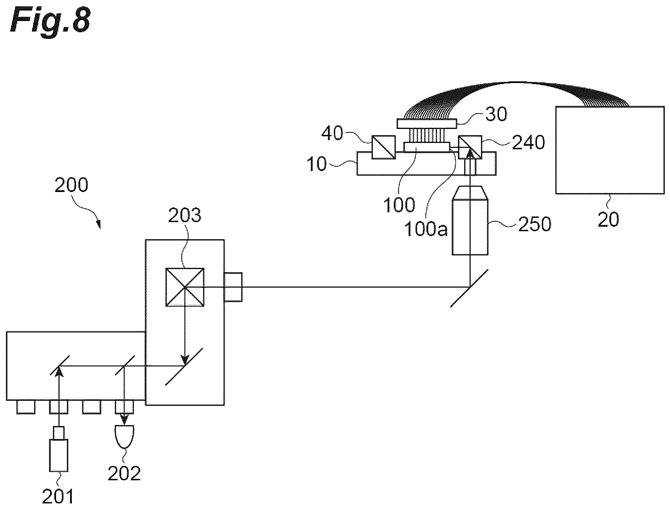

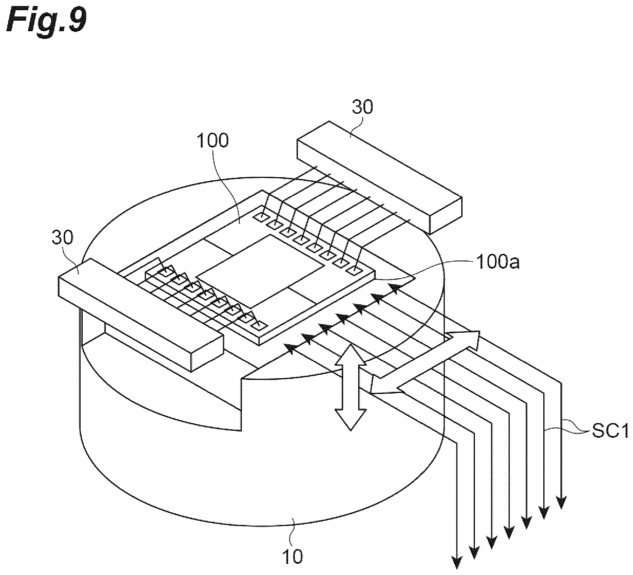

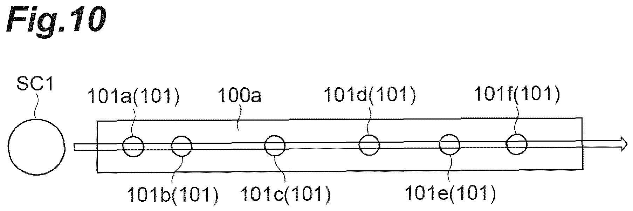

FIGS. 8 to 10 are explanatory diagrams of a process for approximately identifying the position of the optical input unit 101. As shown in FIG. 8, the first scanner unit 200 radiates light to the input end surface 100a of the PIC 100. As shown in FIG. 9, the first scanner unit 200 scans an irradiation area of light SC1 from the laser light source 201 horizontally and/or vertically on the input end surface 100a to perform the optical scan. Here, as shown in FIG. 10, there are a plurality of input units 101 (input units 101a, 101b, 101c, 101d, 101e, and 101f in the example in FIG. 10) on the input end surface 100a, and the diameter of the light SC1 scanned on the input end surface 100a is larger than those of the optical input units 101a to 101f. The diameters of the optical input units 101a to 101f may be, for example, 1 $\mu$m or less, or may be approximately 0.5 $\mu$m. The photodiode 202 of the first scanner unit 200 detects the light reflected on the input end surface 100a and outputs a signal related to the detected signal to the computer 70. The signal is at least a signal indicating the intensity of the light detected by the photodiode 202. In addition, before the optical scan, the position of the stage 10 or the first scanner unit 200 and the like may be adjusted so that the input end surface 100a of the PIC 100 is in focus.

Also, the computer 70 identifies the approximate positions of the optical input units 101a to 101f on the basis of the signal output by the photodiode 202 of the first scanner unit 200 (the signal indicating the intensity of the detected light). Such a process is a second process for identifying in advance the positions of the optical input units 101a to 101f to which light is input when the first process for deriving the wavelength information about the light is performed. The computer 70 identifies the positions of the optical input units 101a to 101f from a light intensity difference according to a difference between the reflectance on the optical input units 101a to 101f and the reflectance in areas other than the optical input units 101a to 101f on the input end surface 100a. The positions of the optical input units 101a to 101f identified here are approximate positions, and are identified in the "process for identifying the positions of the optical input unit 101 with high accuracy" to be described in detail below.

(Process for approximately identifying position of optical output unit 102)

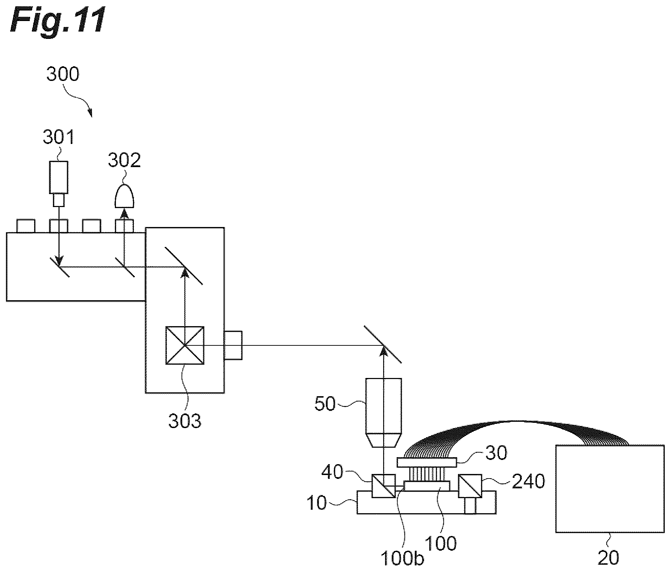

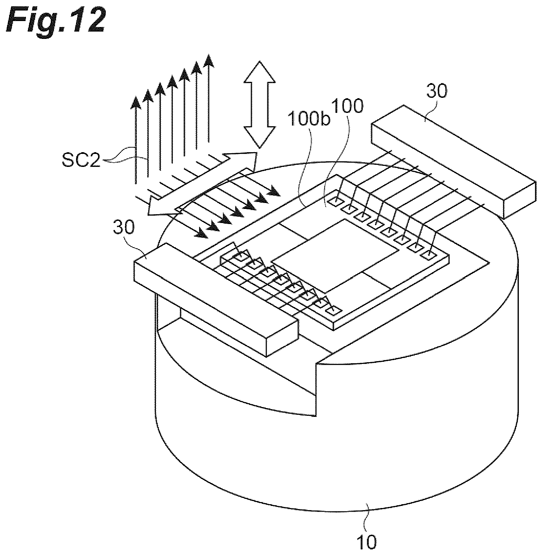

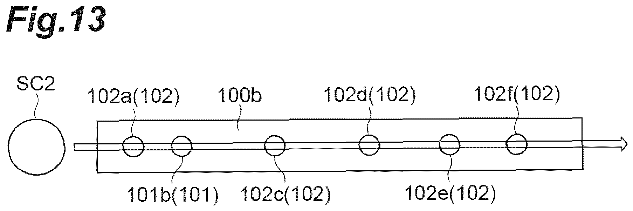

FIGS. 11 to 13 are explanatory diagrams of the process for approximately identifying the position of the optical output unit 102. As shown in FIG. 11, the second scanner unit 300 radiates light to the output end surface 100b of the PIC 100. As shown in FIG. 12, the second scanner unit 300 scans an irradiation area of the light SC2 from the laser light source 301 horizontally and/or vertically in the output end surface 100b to perform the optical scan. Here, as shown in FIG. 13, there are a plurality of output units 102 (output units 102a, 102b, 102c, 102d, 102e, and 102f in the example in FIG. 13) on the output end surface 100b, and the diameter of the light SC2 scanned on the output end surface 100b is larger than the diameters of the optical output units 102a to 102f. The diameters of the optical output units 102a to 102f may be, for example, 1 $\mu$m or less, or may be approximately 0.5 $\mu$m. The photodiode 302 of the second scanner unit 300 detects the light reflected on the output end surface 100b and outputs a signal related to the detected signal to the computer 70. The signal is at least a signal indicating the intensity of the light detected by the photodiode 302. In addition, before the optical scan, the position of the stage 10 or the second scanner unit 300 and the like may be adjusted so that the output end surface 100b of the PIC 100 is in focus.

Also, the computer 70 identifies the approximate position of the optical input units 102a to 102f on the basis of the signal output by the photodiode 302 of the second scanner unit 300 (a signal indicating the intensity of the detected light). This process is a third process for identifying in advance the positions of the optical output units 102a to 102f configured to output light when the first process for deriving the wavelength information about the light is performed. The computer 70 identifies the positions of the optical output units 102a to 102f from a light intensity difference according to a difference between the reflectance in the optical output units 102a to 102f and the reflectance in the areas other than the optical output units 102a to 102f in the output end surface 100b. The positions of the optical output units 102a to 102f identified here are approximate positions, and are identified in the "process for identifying the position of the optical output unit 102 with high accuracy" described in detail below.

(Process for identifying position of optical input unit 101 with high accuracy)

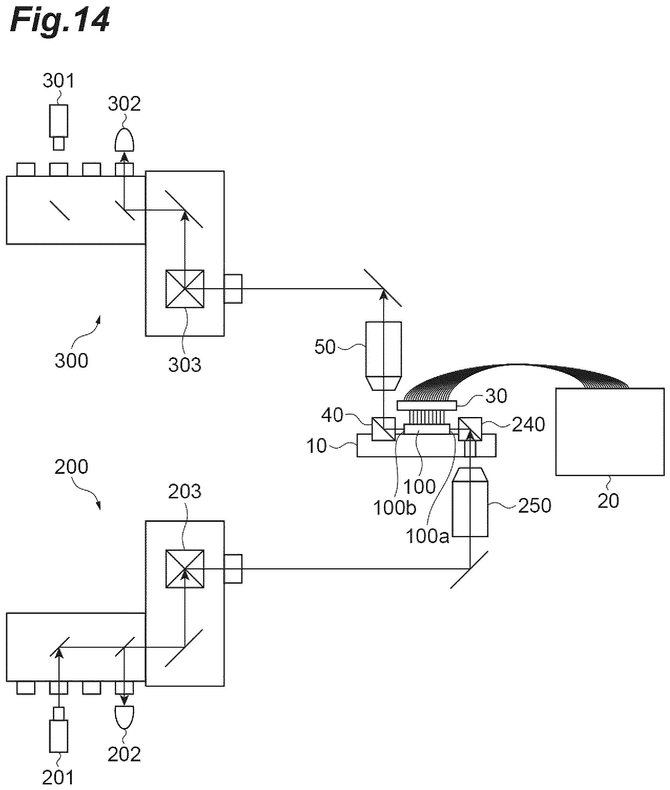

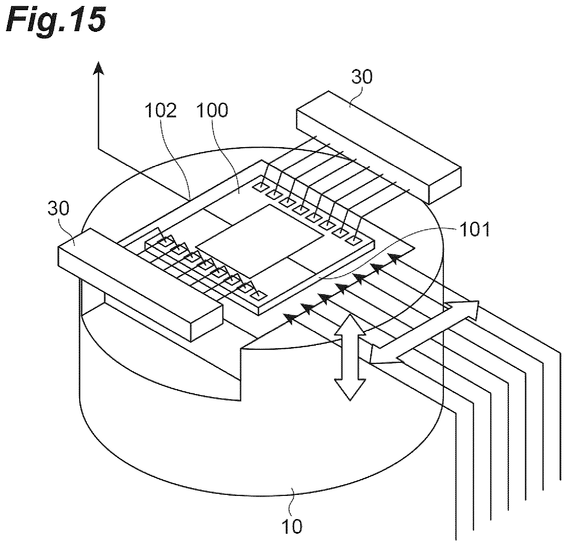

FIGS. 14 and 15 are explanatory diagrams of a process for identifying the optical input unit 101 with high accuracy. As shown in FIGS. 14 and 15, in a state in which the second scanner unit 300 is positioned at a predetermined optical output unit 102 (the optical output unit 102 whose position is identified by the process for approximately identifying the position of the optical output unit 102), light is input to each optical input unit 101 (the optical input units 101a to 101f) by the first scanner unit 200. Also, the light output from the above-described optical output unit 102 is detected by the photodiode 302 of the second scanner unit 300. The first scanner unit 200 scans light onto the optical input units 101a to 101f (and their nearby areas) whose approximate positions have already been identified, and the light intensity is detected by the photodiode 302, so that the positions of the optical input units 101a to 101f can be identified with high accuracy from the light intensity difference.

(Process for identifying position of optical output unit 102 with high accuracy)

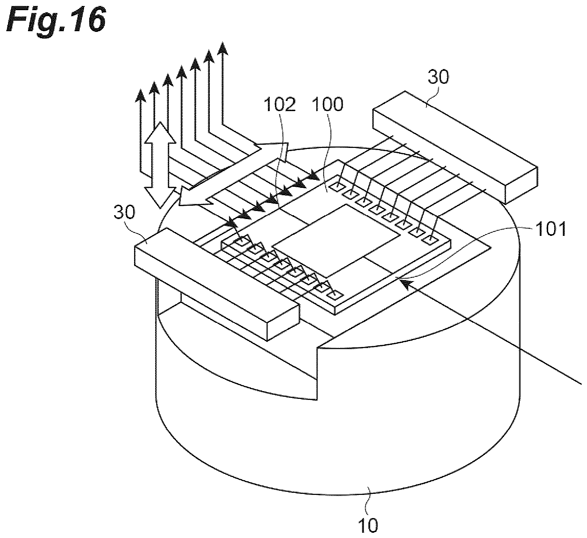

FIGS. 14 and 16 are explanatory diagrams of a process for identifying the optical output unit 102 with high accuracy. As shown in FIGS. 14 and 16, in a state in which the first scanner unit 200 is positioned at a given optical input unit 101, light is input to the optical input unit 101 by the first scanner unit 200. Also, the light output from the PIC 100 is detected by the photodiode 302 of the second scanner unit 300. Light is scanned by the second scanner unit 300 to the optical output units 102a to 102f (and their nearby areas) whose approximate positions have already been identified, and the light intensity is detected by the photodiode 302, so that the positions of the optical output units 102a to 102f can be identified with high accuracy from the light intensity difference.

(Process for deriving wavelength information)

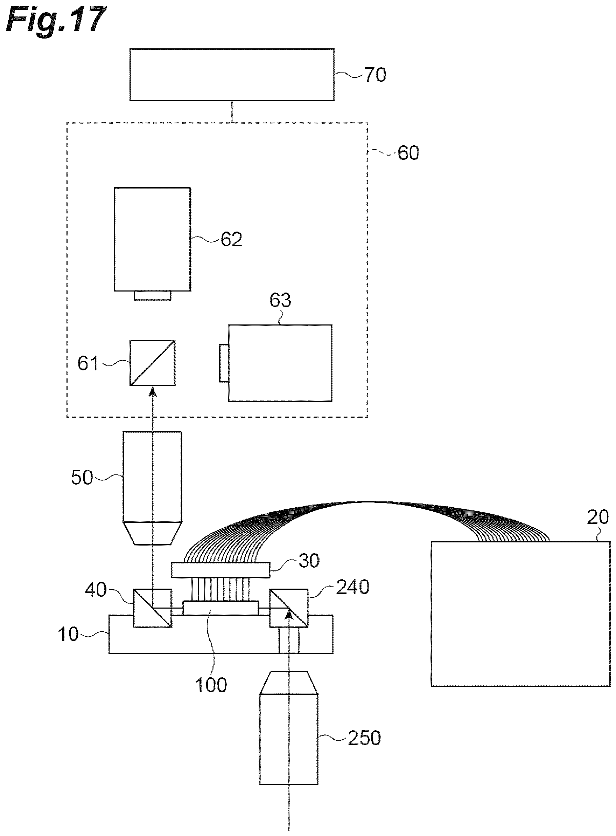

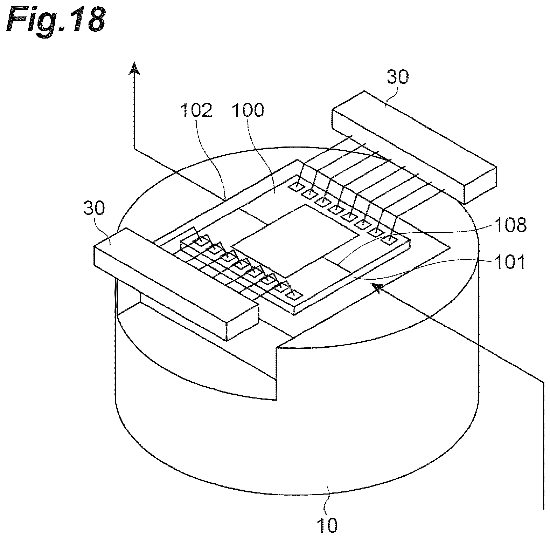

FIGS. 17 to 19 are explanatory diagrams of a process for deriving wavelength information. As shown in FIG. 17, the imaging unit 60 is first aligned so that the light output from the plurality of optical output units 102a to 102f can be captured all at once. Specifically, the LRG dichroic mirror 61 transmits and reflects light output from the plurality of optical output units 102a to 102f on the basis of transmission characteristics. In this case, the LRG dichroic mirror 61 transmits and reflects the light input from the optical input unit 101, guided by the waveguide 108, and output from the optical output unit 102 (see FIG. 18) on the basis of transmission characteristics.

Also, in a state in which light is input to the desired optical input unit 101, the light output from the optical output unit 102 of the PIC 100 and transmitted and reflected by the LRG dichroic mirror 61 is captured by the first camera 62 and the second camera 63.

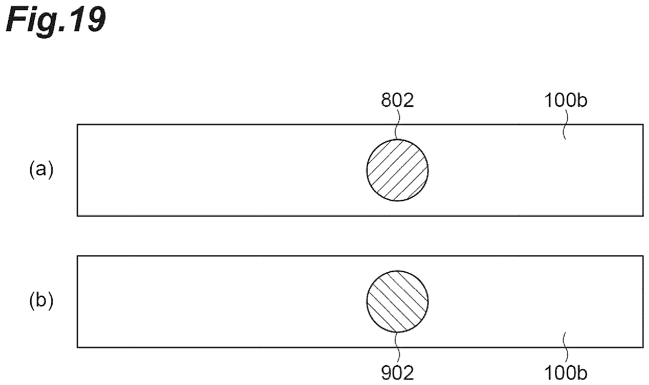

FIG. 19(a) shows an image 802 (a transmission image) of the optical output unit 102 captured by the first camera 62, and FIG. 19(b) shows an image 902 (a reflection image) of the optical output unit 102 captured by the second camera 63. These images 802 and 902 are images corresponding to amounts of light of the captured light. In other words, an integrated value of intensities of the plurality of pixels constituting the image 802 may be used as the transmission intensity (the amount of transmitted light), and an integrated value of intensities of the plurality of pixels constituting the image 902 may be used as the reflection intensity (the amount of reflected light).

The computer 70 performs the first process of deriving wavelength information (specifically, the centroid wavelength) of the light output from each of the output units 102a to 102f on the basis of the transmission image captured by the first camera 62 and the reflection image captured by the second camera 63. An example of a method for deriving the centroid wavelength has been described above.

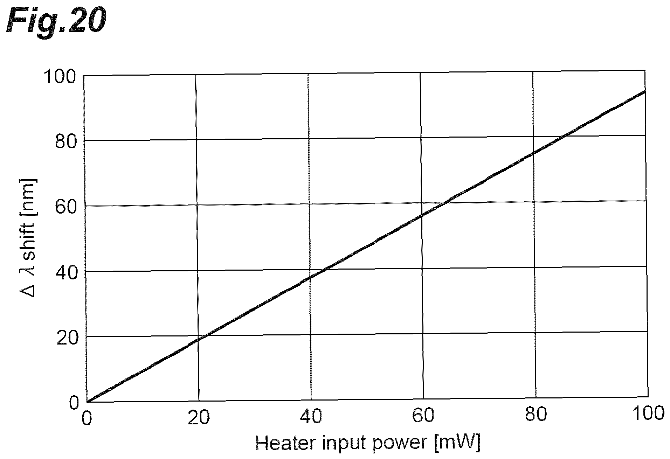

In addition, the computer 70 may create a table indicating a relationship between the wavelength information and the temperature control of the PIC by associating the wavelength information derived in the first process with information about the temperature control of the PIC by the PIC controller 20 when the wavelength information is derived (e.g., electric power input to the microheater). Such a table can be used during normal PIC control (the wavelength control of the PIC 100). As described above, the PIC controller 20 supplies electric power to the microheater and controls the temperature of at least a part of the PIC 100. By such temperature control, the refractive index of the light guided by the waveguide 108 of the PIC 100 is controlled, and the wavelength of the light output from the PIC 100 is controlled. For example, by deriving wavelength information through the first process while changing the conditions of the power input to the microheater by the PIC controller 20, it is possible to create a table in which the electric power input to the microheater is associated with the wavelength information as shown in FIG. 20. In FIG. 20, the horizontal axis represents electric power input to the microheater, and the vertical axis represents an amount of resonant wavelength shift ($\delta\lambda$ in the above Eq. (18)).

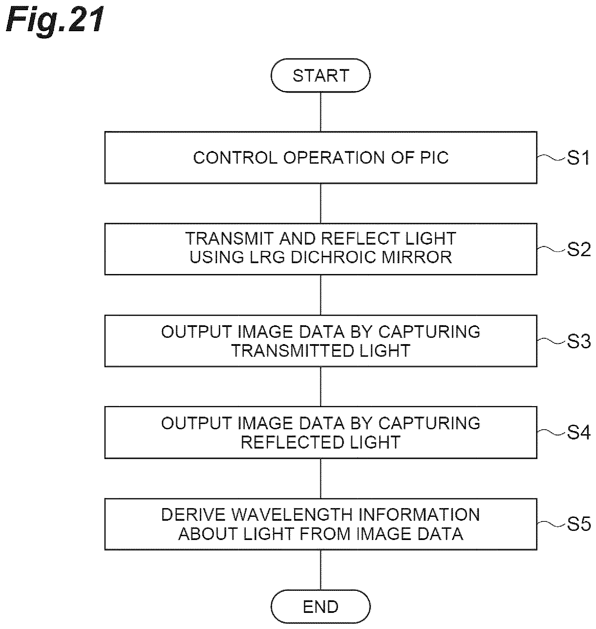

Next, the process for deriving wavelength information within the inspection method performed using the inspection apparatus 1 will be described with reference to a flowchart shown in FIG. 21. FIG. 21 is a flowchart of an inspection method (a detailed process for deriving the wavelength information).

In the process for deriving wavelength information as shown in FIG. 21, the operation of the PIC 100 is first controlled by the PIC controller 20 (step S1). The control of the operation here is the control of the operation of each element in the PIC 100.

Subsequently, the light output from the optical output unit 102 is transmitted and reflected by the LRG dichroic mirror 61 (step S2).

Subsequently, the light transmitted through the LRG dichroic mirror 61 is captured by the first camera 62 and the transmission image is output to the computer 70 (step S3). Moreover, the light reflected by the LRG dichroic mirror 61 is captured by the second camera 63 and the reflection image is output to the computer 70 (step S4).

Also, the wavelength information about the light output from the optical output unit 102 is derived by the computer 70 on the basis of the transmission image and the reflection image (step S5).

Next, functions and effects of the inspection apparatus 1 according to the present embodiment will be described.

The inspection apparatus 1 is an inspection apparatus for inspecting the PIC 100 having at least one optical output unit 102 and the waveguide 108, the inspection apparatus including: the stage 10 configured to hold the PIC 100, the PIC controller 20 configured to control an operation of the PIC 100, the LRG dichroic mirror 61 having a transmission characteristic in which transmittance varies linearly in a predetermined wavelength range and configured to transmit and reflect light guided by the waveguide 108 and output from at least one optical output unit 102 on the basis of the transmission characteristic, the first camera 62 configured to capture the light transmitted through the LRG dichroic mirror 61 to output a transmission image, the second camera 63 configured to capture the light reflected by the LRG dichroic mirror 61 to output a reflection image, and the computer 70 configured to execute a first process for deriving wavelength information about light output from the optical output unit 102 on the basis of the transmission image and the reflection image.

In this inspection apparatus 1 according to the present embodiment, light output from the optical output unit 102 of the PIC 100 is transmitted and reflected by the LRG dichroic mirror 61 in accordance with a wavelength. Also, the wavelength information about the light output from the optical output unit 102 is derived on the basis of the transmission image obtained by capturing the transmitted light and the reflection image obtained by capturing the reflected light. Thus, in the inspection apparatus 1 according to the present embodiment, because the LRG dichroic mirror 61 is used to transmit and reflect light according to a wavelength, the transmission and reflection images are image data according to the wavelength of the light. By deriving light wavelength information from such image data, it is possible to obtain light wavelength information with high accuracy. As described above, the inspection apparatus 1 according to the present embodiment can acquire information (specifically, wavelength information) of the light output from the PIC 100, and as a result, the PIC 100 can be appropriately inspected using the wavelength information.

The PIC 100 may have a plurality of optical output units 102a to 102f, and the LRG dichroic mirror 61 may transmit and reflect light output from the plurality of optical output units 102a to 102f on the basis of transmission characteristics. According to this configuration, the wavelength information about light from a plurality of optical output units 102a to 102f, which are spatially provided at positions different from each other, can be acquired at once and the PIC 100 can be inspected more quickly and appropriately.

The PIC controller 20 may control the temperature of at least a part of the PIC 100. The temperature of the PIC 100 can be controlled in this way to change the refractive index of the waveguide constituting the optical ring resonance circuit 110 of the PIC 100, for example, to control the resonant wavelength of light in the optical ring resonance circuit 110. Thereby, it is possible to appropriately inspect the PIC 100 while easily changing the conditions of the light wavelength.

The PIC 100 has at least one optical input unit 101, and the LRG dichroic mirror 61 may transmit and reflect light input from the optical input unit 101, guided by the waveguide 108, and output from the optical output unit 102, on the basis of transmission characteristics. According to this configuration, wavelength information can be appropriately acquired for the light input from the optical input unit 101 of the PIC 100 and output from the optical output unit 102 via the waveguide 108.

The above-described inspection apparatus 1 may further include a first scanner unit 200 that performs an optical scan on the input end surface 100a of the PIC 100 on which the optical input unit 101 is formed and detects the light related to the optical scan, and the computer 70 may further perform a second process for identifying in advance the position of the optical input unit 101 to which light is input when the first process is performed and identify the position of the optical input unit 101 on the basis of the intensity of the light detected by the first scanner unit 200 in the second process. According to this configuration, the position of the optical input unit 101 can be identified from the light intensity difference, and the subsequent first process (the process for deriving wavelength information about the light output from the optical output unit 102) can be appropriately performed.

The above-described inspection apparatus 1 may further include a second scanner unit 300 that performs an optical scan on the output end surface 100b of the PIC 100 on which the optical output unit 102 is formed and detects the light related to the optical scan, and the computer 70 may further perform a third process for identifying in advance the position of the optical output unit 102 that outputs light when the first process is performed and identify the position of the optical output unit 102 on the basis of the intensity of the light detected by the second scanner unit 300 in the third process. According to this configuration, the position of the optical output unit 102 can be identified from the light intensity difference, and the subsequent first process (the process for deriving wavelength information about the light output from the optical output unit 102) can be carried out appropriately.

In the first process, the computer 70 may derive the transmission intensity, which is an intensity of the light transmitted through the LRG dichroic mirror 61, from the transmission image, derive the reflection intensity, which is an intensity of the light reflected by the LRG dichroic mirror 61, from the reflection image, and derive the wavelength information on the basis of the transmission intensity and the reflection intensity. In the LRG dichroic mirror 61, because light is transmitted and reflected in accordance with a wavelength, wavelength information can be derived with high accuracy from information about the transmission intensity (an amount of transmitted light) and the reflection intensity (an amount of reflected light).

The computer 70 may derive a difference value between the transmission intensity and the reflection intensity and derive the wavelength information on the basis of the difference value. The wavelength information can be derived with high accuracy by deriving the wavelength information from the difference value between the transmission intensity and the reflection intensity.

The wavelength information may be information indicating the centroid wavelength of the light output from the optical output unit 102. Thus, the wavelength information can be appropriately derived.

The computer 70 may further perform a fourth process for creating a table indicating a relationship between the wavelength information and temperature control of the PIC 100 by associating the wavelength information derived in the first process with information about the temperature control of the PIC 100 by the PIC controller 20 at the time when the wavelength information is derived. According to this configuration, a table for temperature control when the wavelength of the PIC 100 is adjusted can be created and the PIC 100 can be more easily controlled.

[Second embodiment]

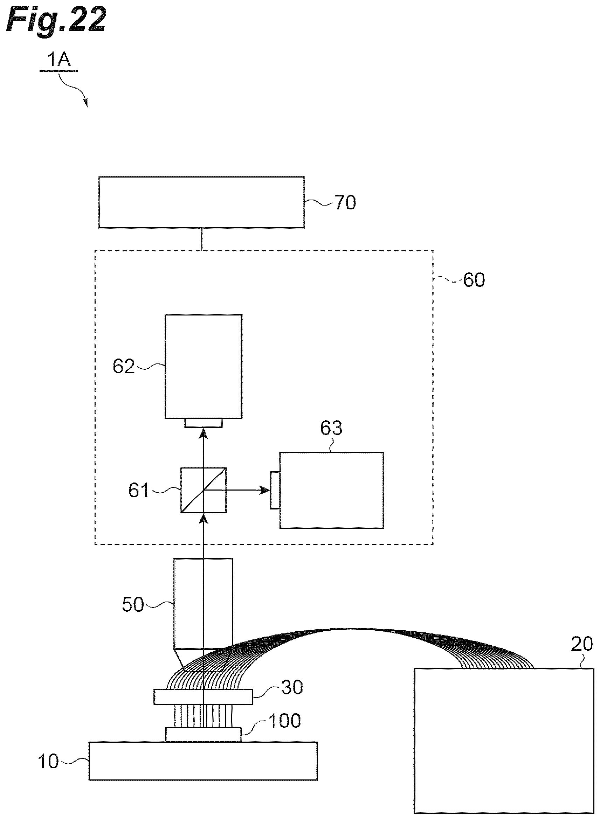

Next, a second embodiment of the present disclosure will be described with reference to FIGS. 22 to 25. In the second embodiment, differences from the first embodiment will be mainly described, and descriptions that are redundant with those of the first embodiment will be omitted.

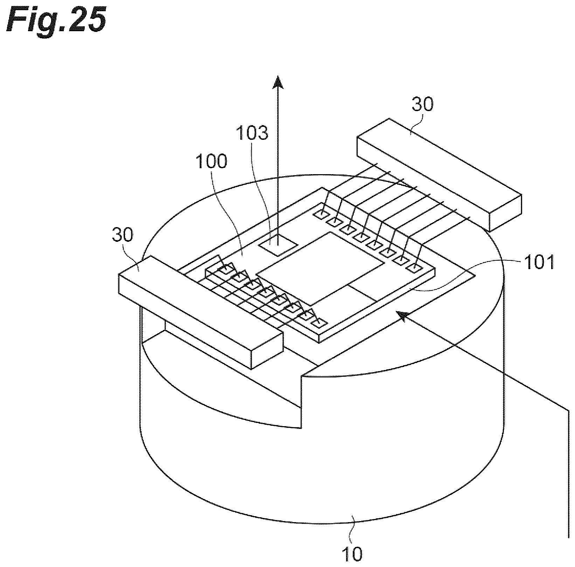

FIG. 22 is a side view schematically showing an inspection apparatus 1A according to the second embodiment. The inspection apparatus 1A has a configuration similar to that of the inspection apparatus 1. The inspection apparatus 1A derives wavelength information about light output from a grating 103 (see FIG. 25), which is the optical output unit provided on a front (top) surface of a PIC 100. In this case, an imaging unit 60 is arranged directly above the front (top) surface of the PIC 100 so that the light output from the grating 103 can be captured.

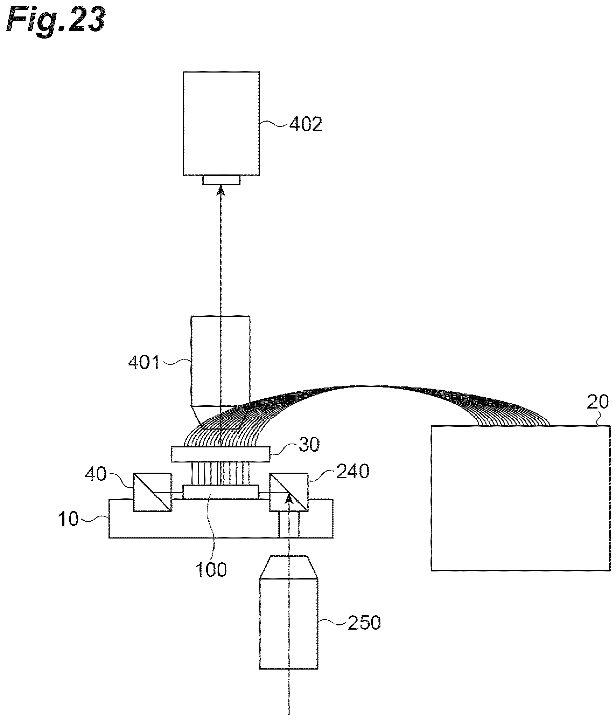

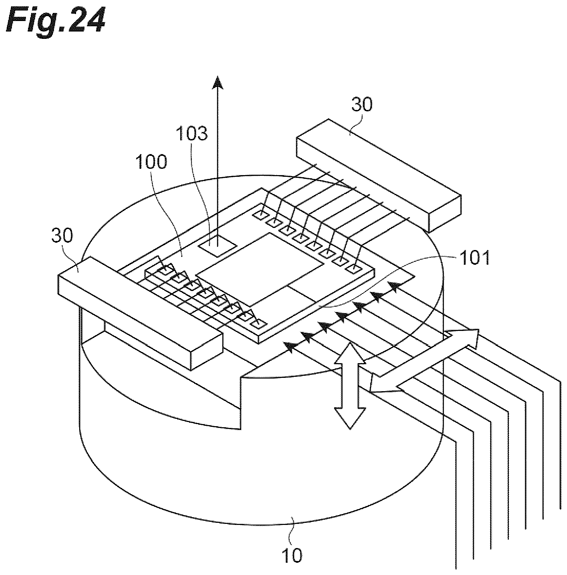

Processes of the inspection method to be performed using the inspection apparatus 1A will be described. In this inspection method, as in the inspection method for the first embodiment, a setting process (see FIGS. 6(a) to 6(c)) is first performed. Subsequently, if necessary, a process for approximately identifying a optical input unit 101 and a process for identifying the optical input unit 101 with high accuracy are performed. These processes are similar to those described in the first embodiment. Subsequently, a process for identifying the grating 103 is performed. Specifically, as shown in FIGS. 23 and 24, light is input to the optical input unit 101 of the PIC 100 by the first scanner unit 200 and light from the grating 103 formed on the front (top) surface of the PIC 100 is captured by an observation camera 402. In this case, a scan process of a first scanner unit 200 causes light to be input to each optical input unit 101. Thus, the light from the grating 103 is captured by the observation camera 402, and a position of the grating 103 formed on the front (top) surface of the PIC 100 can be accurately identified.

Subsequently, the process for deriving wavelength information is performed. Specifically, first, the imaging unit 60 is aligned so that the light output from the grating 103 can be captured. Specifically, an LRG dichroic mirror 61 transmits and reflects the light output from the grating 103 on the basis of transmission characteristics. At this time, a condenser lens 50 and/or a stage 10 may be adjusted in a direction of an optical axis of the condenser lens 50 to focus on the front (top) surface of the PIC 100.

Also, in a state in which light is input to the desired optical input unit 101, light is output from the grating 103 formed on the front (top) surface of the PIC 100 (see FIG. 25), and the light is transmitted and reflected by the LRG dichroic mirror 61 and captured by a first camera 62 and a second camera 63.

Also, the wavelength information (specifically, the centroid wavelength) of the light output from the grating 103 is derived by a computer 70 on the basis of a transmission image captured by the first camera 62 and a reflection image captured by the second camera 63.

[Third embodiment]

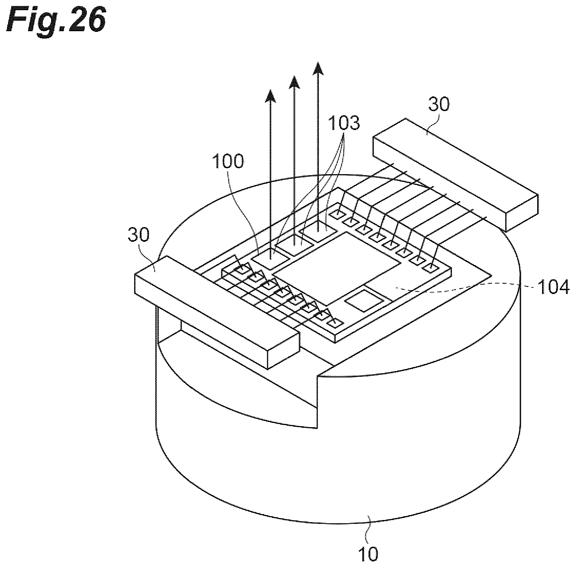

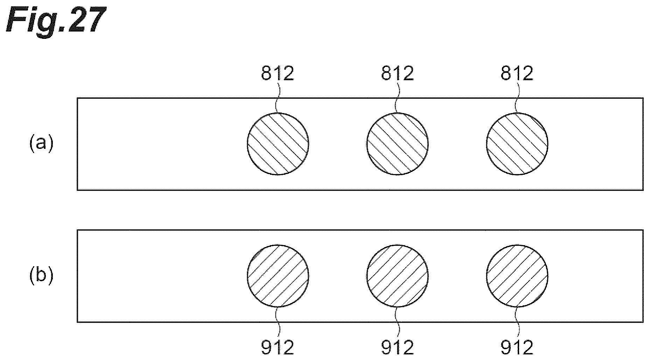

Next, a third embodiment of the present disclosure will be described with reference to FIGS. 26 and 27. In the third embodiment, differences from the first embodiment and the second embodiment will be mainly described, and descriptions that are redundant with those of the first embodiment and the second embodiment will be omitted.

FIGS. 26 and 27 are explanatory diagrams of a process for deriving wavelength information in the third embodiment. As shown in FIG. 26, in the third embodiment, light is emitted from a laser element 104 inside the PIC 100, and the light is output from a plurality of gratings 103 formed on the front (top) surface of the PIC 100. That is, in the third embodiment, light generated by the laser element 104 inside the PIC 100 is output from the plurality of gratings 103 instead of the light input from outside the PIC 100 to the inside of the PIC 100.

The process of the inspection method in this case is described below. In this inspection method, as in the inspection method of the second embodiment, a pre-preparation process such as a setting process is performed and a process for deriving wavelength information is subsequently performed.

In the process for deriving wavelength information, the imaging unit 60 is first aligned so that the light output from the plurality of gratings 103 can be captured all at once. Specifically, the LRG dichroic mirror 61 transmits and reflects light output from the plurality of gratings 103 on the basis of transmission characteristics. At this time, the condenser lens 50 and/or the stage 10 may be adjusted in the direction of the optical axis of the condenser lens 50 to focus on the front (top) surface of the PIC 100.

Also, in a state in which light is emitted from the laser element 104 inside the PIC 100, light is output from the plurality of gratings 103 formed on the front (top) surface of the PIC 100 (see FIG. 26) and the light is transmitted and reflected by the LRG dichroic mirror 61 and captured by the first camera 62 and second camera 63.

FIG. 27(a) is a diagram showing an image 812 (a transmission image) of a plurality of gratings 103 captured by the first camera 62, and FIG. 27(b) is a diagram showing an image 912 (a reflection image) of a plurality of gratings 103 captured by the second camera 63. These images 812 and 912 are images corresponding to amounts of light that has been captured.

Also, the wavelength information (specifically, the centroid wavelength) about the light output from each grating 103 is derived by the computer 70 on the basis of the transmission image captured by the first camera 62 and the reflection image captured by the second camera 63.

Although the embodiment of the present disclosure has been described above, the present disclosure is not limited thereto.

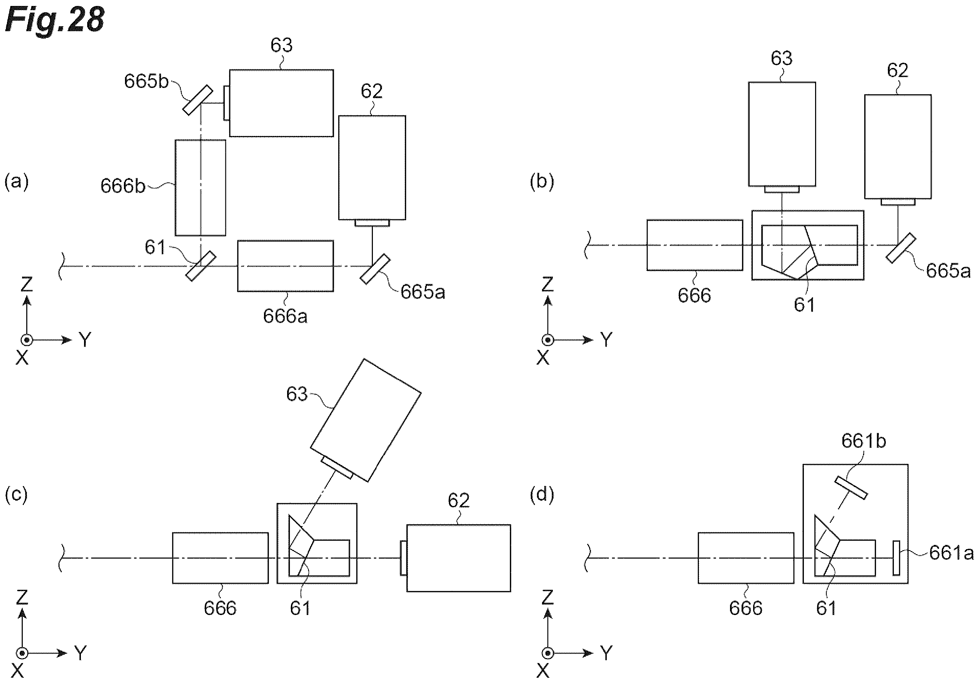

For example, the configuration of the imaging unit is not limited to the above-described aspect of the imaging unit 60, but may have aspects shown in FIGS. 28(a) to 28(d). In the example shown in FIG. 28(a), light transmitted through the LRG dichroic mirror 61 is transmitted through an image forming lens 666a and reflected by a mirror 665a and is captured by the first camera 62. The light reflected by the LRG dichroic mirror 61 is transmitted through the image forming lens 666b and reflected by the mirror 665b and is captured by the second camera 63. In the examples shown in FIGS. 28(b) and 28(c), the LRG dichroic mirror 61 is provided within a prism. In the examples shown in FIGS. 28(b) and 28(c), light transmitted through the LRG dichroic mirror 61 is transmitted through the prism and reflected by the mirror 665a and is captured by the first camera 62. The light reflected by the LRG dichroic mirror 61 is reflected by the prism and captured by the second camera 63. When the LRG dichroic mirror 61 is provided within the prism, a degree of freedom of the layout of the first camera 62 and second camera 63 is improved. In the example shown in FIG. 28(d), the prism with the built-in LRG dichroic mirror 61 and the light detection units 661a and 661b, are configured as a single camera.

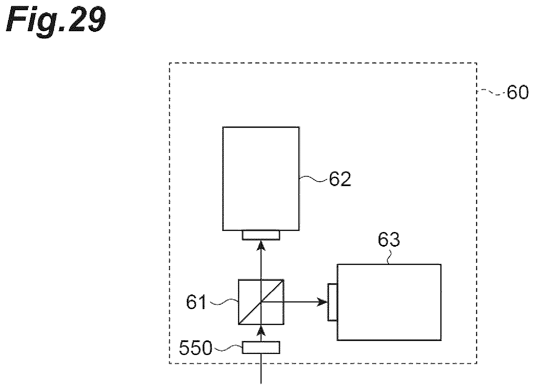

Moreover, the imaging unit 60 may have a sensitivity correction filter 550 that flattens the spectral response characteristics of the entire optical system in front of the LRG dichroic mirror (optical filter) 61, as shown in FIG. 29. By providing a sensitivity correction filter 550, the centroid wavelength of light with a wavelength width can be determined more accurately. In addition, the sensitivity correction filter 550 may be provided between the LRG dichroic mirror (optical filter) 61 and the first camera (first image sensor) 62 and between the LRG dichroic mirror (optical filter) 61 and the second camera (second image sensor) 63.

Although the case where the wavelength information is derived by the computer 70 separate from the first camera 62 and the second camera 63 has been described, the present disclosure is not limited thereto, and each process such as the derivation of wavelength information may be performed by an integrated circuit inside the camera. Moreover, the heater or cooler that adjusts the temperature of the PIC may be provided inside the PIC or outside the PIC. Moreover, the PIC controller, which controls the operation of the PIC, may be connected from outside the PIC by a tester or the like or may be connected via a board electrically connected to a PIC board.

## Reference Signs List

1, 1A Inspection apparatus, 10 Stage, 20 PIC controller, 61 LRG dichroic mirror (optical filter), 62 First camera (first image sensor), 63 Second camera (second image sensor), 70 Computer (analysis unit), 100a Input end surface (first area), 100b Output end surface (second area), 101 Optical input unit, 102 Optical output unit, 103 Grating (optical output unit), 108 Waveguide, 200 First scanner unit (first optical scanner unit), 300 Second scanner unit (second optical scanner unit)

## Claims

1. An inspection apparatus for inspecting a photonic integrated circuit having at least one optical output unit and a waveguide, the inspection apparatus comprising:

   a stage configured to hold the photonic integrated circuit;
   a control unit configured to control an operation of the photonic integrated circuit;
   an optical filter having a transmission characteristic in which transmittance varies linearly in a predetermined wavelength range and configured to transmit and reflect light guided by the waveguide and output from at least one optical output unit on the basis of the transmission characteristic;
   a first image sensor configured to capture the light transmitted through the optical filter to output first image data;
   a second image sensor configured to capture the light reflected by the optical filter to output second image data; and
   an analysis unit configured to execute a first process for deriving wavelength information about light output from the optical output unit on the basis of the first image data and the second image data.

2. The inspection apparatus according to claim 1,

   wherein the photonic integrated circuit has a plurality of optical output units, and
   wherein the optical filter transmits and reflects the light output from the plurality of optical output units on the basis of the transmission characteristic.

3. The inspection apparatus according to claim 1, wherein the control unit controls a temperature of at least a part of the photonic integrated circuit.

4. The inspection apparatus according to claim 1,

   wherein the photonic integrated circuit has at least one optical input unit, and
   wherein the optical filter transmits and reflects the light input from the optical input unit, guided by the waveguide, and output from the optical output unit, on the basis of the transmission characteristic.

5. The inspection apparatus according to claim 4, further comprising a first optical scanner unit configured to perform an optical scan on a first area where the optical input unit is formed in the photonic integrated circuit and detect the light related to the optical scan,

   wherein the analysis unit
   further executes a second process for identifying in advance a position of the optical input unit to which the light is input when the first process is performed, and
   identifies the position of the optical input unit on the basis of an intensity of the light detected by the first optical scanner unit in the second process.

6. The inspection apparatus according to claim 1, further comprising a second optical scanner unit configured to perform an optical scan on a second area where the optical output unit is formed in the photonic integrated circuit and detect the light related to the optical scan,

   wherein the analysis unit
   further executes a third process for identifying in advance a position of the optical output unit from which light is output when the first process is performed, and
   identifies the position of the optical output unit on the basis of an intensity of the light detected by the second optical scanner unit in the third process.

7. The inspection apparatus according to any one of claims 1 to 6, wherein, in the first process, the analysis unit derives a transmission intensity, which is an intensity of the light transmitted through the optical filter, from the first image data, derives a reflection intensity, which is an intensity of the light reflected by the optical filter, from the second image data, and derives the wavelength information on the basis of the transmission intensity and the reflection intensity.

8. The inspection apparatus according to claim 7, wherein the analysis unit derives a difference value between the transmission intensity and the reflection intensity and derives the wavelength information on the basis of the difference value.

9. The inspection apparatus according to any one of claims 1 to 6, wherein the wavelength information is information indicating a centroid wavelength of the light output from the optical output unit.

10. The inspection apparatus according to any one of claims 1 to 6, wherein the analysis unit further executes a fourth process for creating a table indicating a relationship between the wavelength information and temperature control of the photonic integrated circuit by associating the wavelength information derived in the first process with information about the temperature control of the photonic integrated circuit by the control unit at the time when the wavelength information is derived.

11. An inspection method for inspecting a photonic integrated circuit having at least one optical output unit and a waveguide, the inspection method comprising:

    controlling an operation of the photonic integrated circuit;
    transmitting and reflecting light guided by the waveguide and output from at least one optical output unit on the basis of a transmission characteristic, by an optical filter having the transmission characteristic in which transmittance varies linearly in a predetermined wavelength range;
    capturing the light transmitted through the optical filter to output first image data;
    capturing the light reflected by the optical filter to output second image data; and
    deriving wavelength information about light output from the optical output unit on the basis of the first image data and the second image data.

# Fig.1

*Fig.2*

# Fig.3

(a)

101          100a

(b)

102          100b

Fig.4

EP 4 711 732 A1

# Fig.5

Fig.6

**Fig.7**

# Fig.8

*Fig.9*

Fig.10

# Fig.11

## Fig.12

**Fig.13**

# Fig.14

# Fig.15

*Fig.16*

# Fig.17

*Fig.18*

# Fig.19

(a)

802   100b

(b)

902   100b

**Fig.20**

# Fig.21

```
        START

CONTROL OPERATION OF PIC          S1

TRANSMIT AND REFLECT LIGHT        S2
USING LRG DICHROIC MIRROR

OUTPUT IMAGE DATA BY CAPTURING    S3
TRANSMITTED LIGHT

OUTPUT IMAGE DATA BY CAPTURING    S4
REFLECTED LIGHT

DERIVE WAVELENGTH INFORMATION     S5
ABOUT LIGHT FROM IMAGE DATA

         END
```

*Fig.22*

1A

# Fig.23

## Fig.24

## Fig.25

Fig.26

*Fig.27*

## Fig.28

EP 4 711 732 A1

*Fig.29*

## INTERNATIONAL SEARCH REPORT

| International application No. |
|---|
| **PCT/JP2024/008099** |

| A. | CLASSIFICATION OF SUBJECT MATTER |
|---|---|

*G01M 11/00*(2006.01)i; *G02B 6/122*(2006.01)i; *H01S 5/0683*(2006.01)i
FI:   G01M11/00 T; H01S5/0683; G02B6/122

According to International Patent Classification (IPC) or to both national classification and IPC

| B. | FIELDS SEARCHED |
|---|---|

Minimum documentation searched (classification system followed by classification symbols)

G01M11/00-11/08; G02B6/00-6/54; H01S5/00-5/50; G01J3/00-3/52

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

| C. | DOCUMENTS CONSIDERED TO BE RELEVANT |
|---|---|

| Category* | Citation of document, with indication, where appropriate, of the relevant passages | Relevant to claim No. |
|---|---|---|
| A | JP 2020-507087 A (CARL ZEISS SMT GMBH) 05 March 2020 (2020-03-05) | 1-11 |
| A | JP 6-323955 A (CANON KABUSHIKI KAISHA) 25 November 1994 (1994-11-25) | 1-11 |
| A | WO 2021/161854 A1 (HAMAMATSU PHOTONICS KK) 19 August 2021 (2021-08-19) | 1-11 |
| A | US 2020/0132947 A1 (SAMSUNG ELECTRONICS CO., LTD.) 30 April 2020 (2020-04-30) | 1-11 |

☐ Further documents are listed in the continuation of Box C.          ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **04 April 2024** | **23 April 2024** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (July 2022)

## INTERNATIONAL SEARCH REPORT
### Information on patent family members

International application No.

**PCT/JP2024/008099**

| Patent document cited in search report | | | Publication date (day/month/year) | Patent family member(s) | | | Publication date (day/month/year) |
|---|---|---|---|---|---|---|---|
| JP | 2020-507087 | A | 05 March 2020 | US | 2019/0339327 | A1 | |
| | | | | WO | 2018/138249 | A1 | |
| | | | | DE | 102017101626 | A1 | |
| JP | 6-323955 | A | 25 November 1994 | (Family: none) | | | |
| WO | 2021/161854 | A1 | 19 August 2021 | US | 2023/0066638 | A1 | |
| | | | | US | 2023/0058064 | A1 | |
| | | | | US | 2023/0061667 | A1 | |
| | | | | WO | 2021/161684 | A1 | |
| | | | | WO | 2021/161986 | A1 | |
| | | | | EP | 4067842 | A1 | |
| | | | | EP | 4067843 | A1 | |
| | | | | EP | 4086597 | A1 | |
| | | | | CN | 115104002 | A | |
| | | | | KR | 10-2022-0137616 | A | |
| | | | | TW | 202140992 | A | |
| | | | | TW | 202140993 | A | |
| | | | | TW | 202200972 | A | |
| | | | | CN | 115087849 | A | |
| | | | | CN | 115104000 | A | |
| | | | | KR | 10-2022-0137615 | A | |
| | | | | KR | 10-2022-0137629 | A | |
| | | | | JP | 2023-169165 | A | |
| US | 2020/0132947 | A1 | 30 April 2020 | KR | 10-2020-0047833 | A | |
| | | | | CN | 111090038 | A | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2022058070 A